Europäisches Patentamt

European Patent Office

Office européen des brevets

(11) Numéro de publication: **0 243 229
B1**

(12) # FASCICULE DE BREVET EUROPEEN

(45) Date de publication du fascicule du brevet:
31.05.89

(51) Int. Cl.⁴: **F16D 23/14**

(21) Numéro de dépôt: **87400755.2**

(22) Date de dépôt: **06.04.87**

(54) Montage de butée de débrayage notamment pour véhicule automobile.

(30) Priorité: **18.04.86 FR 8605575**

(43) Date de publication de la demande:
**28.10.87 Bulletin 87/44**

(45) Mention de la délivrance du brevet:
**31.05.89 Bulletin 89/22**

(84) Etats contractants désignés:
**DE IT**

(56) Documents cités:
**FR-A- 2 304 826
FR-A- 2 539 473
FR-A- 2 544 035**

(73) Titulaire: **VALEO, 64 Avenue de la Grande Armée,
F-75017 Paris(FR)**

(72) Inventeur: **Gay, Christian, 36 Rue Labat,
F-75018 Paris(FR)**
Inventeur· **Lassiaz, Philippe, 20 Rue Thiers,
F-92100 Boulogne(FR)**

(74) Mandataire: **CABINET BONNET-THIRION, 95 Boulevard
Beaumarchais, F-75003 Paris(FR)**

## Description

La présente invention concerne d'une manière générale les butées de débrayage, notamment pour véhicules automobiles.

Elle vise plus particulièrement celles de ces butées de débrayage qui, dites tirées, sont destinées à agir en traction sur le dispositif débrayeur de l'embrayage à commander, et qui, pour ce faire, sont attelées à celui-ci.

Il a été proposé, à cet effet, dans certains montages de butée de débrayage, et c'est le cas, notamment, tant dans le montage de butée de débrayage décrit dans la FR-A 2 304 826 que dans celui décrit la FR-A 2 588 338 de mettre en oeuvre, entre la butée de débrayage et le dispositif débrayeur à commander, pour l'attelage de cette butée de débrayage à ce dispositif débrayeur, une pièce, dite ici par simple commodité "pièce d'accostage", ou "pièce d'action", qui, convenablement rapportée sur ledit dispositif débrayeur, comporte, radialement, du côté de celui-ci opposé à la butée de débrayage, une collerette d'appui, par laquelle elle est apte à porter axialement sur ledit dispositif débrayeur et ainsi à agir sur lui, et, axialement, une douille, par laquelle elle traverse ce dispositif débrayeur, en coopération avec des moyens de solidarisation en traction, qui, établis entre une telle pièce d'accostage et une pièce, dite ici par simple commodité "pièce d'attaque" appartenant à la butée de débrayage, sont propres à assurer une liaison axiale entre lesdites pièces dans le sens axial allant du dispositif débrayeur à la butée de débrayage.

En pratique, ces moyens de solidarisation en traction comportent, d'une manière générale, d'une part, un organe annulaire de couplage, par exemple, tel que cela est le cas dans la FR-A 2 588 338 mentionnée ci-dessus, un simple jonc, qui est porté par l'une quelconque des pièces à solidariser en traction, et qui est élastiquement déformable radialement, et, d'autre part, une portée d'entraînement, qui est ménagée globalement transversalement sur l'autre desdites pièces, et avec laquelle ledit organe annulaire de couplage est apte à coopérer axialement en appui dans le sens axial correspondant à la liaison axiale recherchée.

Une telle disposition a notamment pour avantage de permettre d'équiper par avance de la pièce d'accostage le dispositif débrayeur de l'embrayage à commander, avant même l'assemblage du mécanisme d'embrayage correspondant, et d'assurer ensuite, lors de l'assemblage de l'ensemble, la venue en prise par simple encliquetage de la butée de débrayage avec ladite pièce d'accostage, et donc avec ledit dispositif débrayeur.

En effet, lors d'un tel assemblage, la butée de débrayage est engagée axialement, par sa pièce d'attaque, dans la pièce d'accostage, et, lors d'un tel engagement, l'organe annulaire de couplage, qui est porté par l'une desdites pièces, et qui, donc, dans les limites d'un certain jeu ou débattement axial, est maintenu axialement sur celle-ci, se trouve accosté par l'autre desdites pièces, et, sous la sollicitation de cette dernière, qui tend à l'entraîner alors qu'il est retenu par la pièce qui le porte, il est contraint de passer de sa configuration normale de repos à une autre configuration, déployée ou rétractée, pour laquelle il s'engage sur ou dans l'autre desdites pièces, jusqu'à ce que, au droit de la portée d'entraînement de cette dernière, il prenne élastiquement de lui-même une configuration de couplage, qui n'est pas nécessairement sa configuration initiale de repos, mais pour laquelle, en prise à la fois avec ladite pièce, par sa portée d'entraînement, et avec la pièce qui le porte, il est apte à assurer, comme recherché, une solidarisation axiale en traction de ces deux pièces l'une par rapport à l'autre lorsqu'un mouvement axial d'entraînement inverse du précédent est appliqué à la butée de débrayage.

Mais, en pratique, lorsqu'il est en attente sur la pièce qui le porte, l'organe annulaire de couplage ne se présente pas nécessairement dans la position optimale pour la pièce qui doit l'accoster.

Au contraire, soumis à la gravité, il peut, du seul fait de son propre poids, se trouver désaxé par rapport à celle-ci.

De ce fait, cette pièce ne prend contact avec lui qu'en une seule de ses zones, celle qui en forme la partie supérieure, et, sous l'effet de l'effort d'entraînement axial qu'elle lui applique, il a dès lors tendance à se mettre en biais.

Dans le cas de butées de débrayage de relativement petites tailles, pour lesquelles l'organe annulaire de couplage ne présente lui-même qu'un diamètre relativement petit, cette mise en biais, si elle se produit, n'est le plus souvent pas significative.

Il n'en est par contre pas de même pour les butées de débrayage de relativement grandes tailles pour lesquelles l'organe annulaire de couplage a au contraire un diamètre relativement important.

En effet, dans ce cas, la mise en biais de cet organe annulaire de couplage peut être à l'origine d'un coincement intempestif de celui-ci, et, par là, à un défaut d'encliquetage de sa part entre les pièces concernées.

Dans un tel cas, l'assemblage recherché est défectueux, et il faut réitérer les opérations correspondantes.

Pour pallier cette difficulté, on peut songer à mettre en oeuvre, pour l'organe annulaire de couplage, des moyens élastiques auxiliaires de centrage, qui, soit le maintiennent élastiquement centré par rapport à la pièce qui le porte, à distance de celle-ci, soit le maintiennent élastiquement plaqué contre une portée déterminée de cette pièce, par exemple une portée globalement tronconique, ce qui en assure systématiquement le centrage permanent par rapport à celle-ci.

Mais la mise en oeuvre de tels moyens élastiques auxiliaires de centrage ne peut conduire qu'à une certaine complexité pour l'ensemble, et, notamment, qu'à des coûts de réalisation et de montage non négligeables pour celui-ci.

On peut également songer à doter l'organe annulaire de couplage de pattes propres à coopérer en appui avec la pièce qui le porte, pour son centrage par rapport à celle-ci, par exemple en formant chacune de ces pattes par une déformation locale en arceau, ou boucle, d'un tel organe annulaire de couplage.

En effet, même si, initialement, cet organe annulaire de couplage est l'objet d'une certaine mise en biais lorsqu'il est accosté par la pièce comportant la portée d'entraînement avec laquelle il doit coopérer, il se trouve ensuite systématiquement rappelé dans un plan transversal par ses pattes, en étant dès lors correctement centré par rapport à cette pièce.

Par exemple, de telles pattes peuvent coopérer pour ce faire avec une tranche de la pièce qui le porte, soit à l'une des extrémités axiales de celle-ci, soit à l'occasion d'évidements, qui sont pratiqués pour elles sur une telle pièce, et qu'elles traversent alors chacune respectivement en s'étendant globalement radialement.

Mais, dans tous les cas, pour le centrage recherché, un contact en trois points distincts convenablement répartis circulairement est nécessaire, et l'organe annulaire de couplage doit donc nécessairement comporter trois pattes.

Or, s'agissant par exemple d'un jonc, il s'avère en pratique délicat, et donc coûteux, de former ainsi trois pattes sur un tel jonc.

En outre, dans le cas où l'appui de telles pattes doit se faire sur une tranche d'extrémité de la pièce concernée, elles doivent nécessairement être décalées axialement par rapport à la partie courante de l'organe annulaire de couplage qu'elles affectent, au détriment de l'encombrement axial de l'ensemble.

La présente invention a d'une manière générale pour objet une disposition propre au contraire à donner très simplement satisfaction, sans complication notable d'un tel ensemble ni augmentation particulière de son encombrement axial.

De manière plus précise, elle a pour objet un montage de butée de débrayage du genre mettant en oeuvre, pour l'attelage d'une butée de débrayage au dispositif débrayeur d'un embrayage, d'une part, une pièce dite ici par commodité pièce d'accostage, qui est convenablement rapportée sur ledit dispositif débrayeur, et qui comporte elle-même, globalement radialement, une collerette d'appui, par laquelle elle est apte à porter sur ledit dispositif débrayeur, et, globalement axialement, une douille, par laquelle elle traverse axialement ce dernier, et, d'autre part, des moyens de solidarisation en traction qui, établis entre la pièce d'accostage et une pièce, dite ici par commodité pièce d'attaque, appartenant à la butée de débrayage, sont propres à assurer une liaison axiale entre lesdites pièces dans le sens axial allant du dispositif débrayeur à la butée de débrayage, et qui comportent eux-mêmes un organe annulaire de couplage, qui est porté par l'une quelconque desdites pièces, et qui est élastiquement déformable radialement, et une portée d'entraînement, qui est ménagée globalement transversalement sur l'autre desdites pièces, et avec laquelle ledit organe annulaire de couplage est apte à coopérer axialement en appui, ce montage de butée de débrayage étant d'une manière générale caractérisé en ce que, l'organe annulaire de couplage comportant au moins deux pattes, qui, s'étendant globalement radialement, traversent chacune la douille de la pièce d'accostage à la faveur d'évidements ménagés à cet effet dans celle-ci, lesdites pattes sont chacune aptes à coopérer en appui, par une au moins de leurs portions, avec une portée de guidage appartenant à une surface de guidage coaxiale de ladite douille.

Par exemple, et de manière très simple, cette surface de guidage est formée par la surface de la douille de la pièce d'accostage opposée à celle le long de laquelle s'étend circulairement la partie courante de l'organe annulaire de couplage.

Lorsque cet organe annulaire de couplage est porté par la pièce d'accostage, avec sa partie courante disposée à l'intérieur de la douille de celle-ci, il s'agit donc de la surface extérieure de cette douille.

Dans un tel cas, la surface de guidage suivant l'invention est tout naturellement tronconique, à l'image de la portion correspondante de la surface interne de la douille de la pièce d'accostage, notamment lorsque, comme cela est préférentiellement le cas, cette pièce d'accostage est une pièce en tôle emboutie, et donc d'épaisseur sensiblement constante, ses surfaces interne et externe se déduisant alors l'une de l'autre par une simple translation axiale.

Mais, en variante, la surface de guidage suivant l'invention peut être formée sur des pattes ou languettes spécifiques, qui, d'une seule pièce avec la pièce d'accostage, ou, d'une manière plus générale, avec la pièce portant l'organe annulaire de couplage, se détachent, intérieurement et/ou extérieurement, du volume délimité par la partie courante de celle-ci, et/ou être cylindrique.

Dans tous les cas, cette surface de guidage assure en permanence un centrage convenable de l'organe annulaire de couplage par rapport à la pièce qui le porte, et donc par rapport à la pièce présentant la portée d'entraînement avec laquelle il doit coopérer, en sorte que, lors de son accostage par cette pièce, l'organe annulaire de couplage se présente toujours convenablement par rapport à celle-ci.

Toute mise en biais de cet organe annulaire de couplage étant ainsi évitée, l'encliquetage entre les pièces à solidariser en traction peut avantageusement se faire en toute certitude convenablement.

Les caractéristiques et avantages de l'invention ressortiront d'ailleurs de la description qui va suivre, à titre d'exemple, en référence aux dessins schématiques annexés sur lesquels :

la figure 1 est une vue partielle en coupe axiale d'un montage de butée de débrayage suivant l'invention ;
la figure 2 reprend, à échelle supérieure, le détail de la figure 1 repéré par un encart II-II sur celle-ci ;
la figure 3 est, à échelle différente, une vue en élévation, suivant la flèche III de la figure 1, de la pièce d'accostage mise en oeuvre dans ce montage représentée isolément ;
la figure 4 est une vue en plan de cette pièce d'accostage, suivant la flèche IV de la figure 3 ;
la figure 5 en est, avec un arrachement local, une autre vue en plan, suivant la flèche V de la figure 3 ;
les figures 6, 7, 8 et 9 en sont des vues partielles en coupe axiale, suivant respectivement les lignes VI-VI, VII-VII, VIII-VIII et IX-IX de la figure 3 ;
la figure 10 est, à l'échelle de la figure 3, une vue en élévation, représenté isolément, de l'organe annulaire de couplage mis en oeuvre dans le montage de butée de débrayage suivant l'invention ;

la figure 11 est une vue en plan de cet organe annulaire de couplage, suivant la flèche XI de la figure 10 ;

les figures 12A, 12B, 12C, 12D et 12E sont des vues qui, reprenant celle de la figure 2, illustrent le couplage de la butée de débrayage concernée avec la pièce d'accostage portée par le dispositif débrayeur de l'embrayage à commander ;

la figure 13 est une vue analogue à celle de la figure 2, pour une configuration de découplage de l'organe annulaire de couplage concerné ;

la figure 14 est une vue partielle en coupe axiale analogue à celle de la figure 1, pour une variante de réalisation du montage de butée de débrayage suivant l'invention.

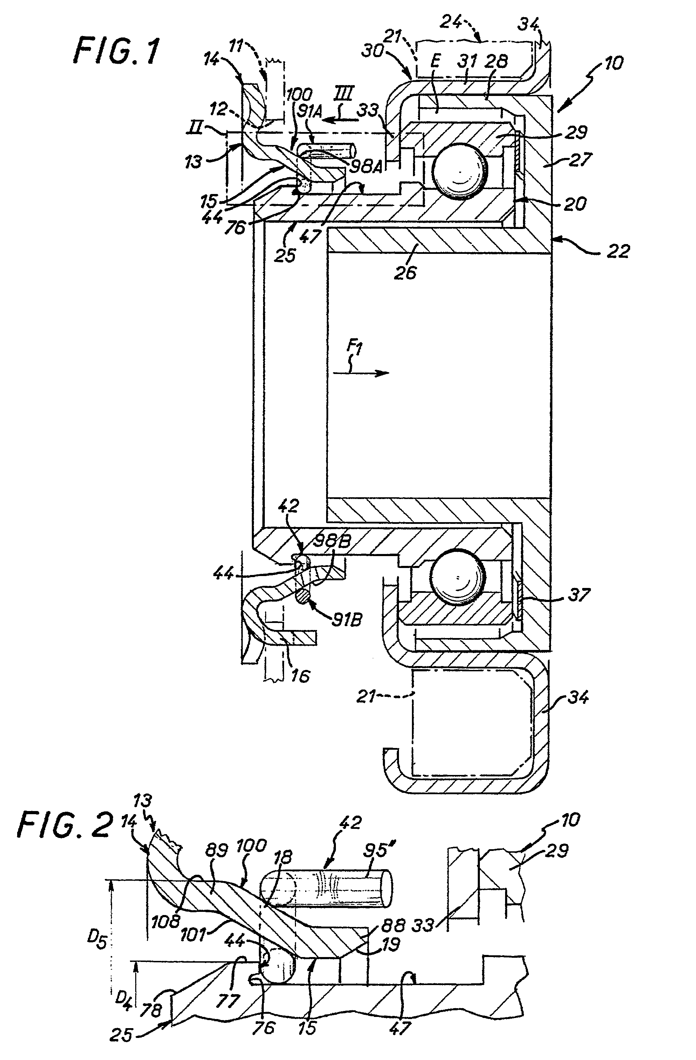

Tel qu'illustré par la figure 1, il s'agit d'atteler une butée de débrayage 10 au dispositif débrayeur 11 d'un quelconque embrayage à commander.

Dans les formes de réalisation représentées, le dispositif débrayeur 11, qui n'a été que schématisé, en traits interrompus, sur la figure 1, est, de manière connue en soi, formé par l'extrémité des doigts radiaux d'un diaphragme, c'est-à-dire d'une pièce annulaire, qui, appartenant à l'embrayage à commander, comporte une partie périphérique circulairement continue, formant rondelle Belleville, pour sollicitation en engagement de cet embrayage, et une partie centrale fragmentée en doigts radiaux par des fentes, à savoir les doigts radiaux en question, pour constitution de leviers propres à sa commande en dégagement.

De manière également connue en soi, pour l'attelage de la butée de débrayage 10 au dispositif débrayeur 11, nécessaire à une action en traction de cette butée de débrayage 10 sur ce dispositif débrayeur 11, il est rapporté sur ce dernier, à la faveur de son ouverture centrale 12, une pièce 13, dite ici par commodité pièce d'accostage.

Dans les formes de réalisation représentées, cette pièce d'accostage, 13, ou pièce d'action, est du type de celle décrite dans la demande de brevet français déposée le 11 avril 1983, sous le No 83 05850, et publiée sous le No 2.544.036.

Une telle pièce d'accostage ne faisant pas partie de la présente invention, elle ne sera pas décrite en détail ici.

Il suffira d'indiquer que, du côté du dispositif débrayeur 11 opposé à la butée de débrayage 10, elle comporte, globalement radialement, une collerette 14, dite collerette d'appui, pour action sur un tel dispositif débrayeur 11, ladite collerette d'appui étant convenablement profilée à cet effet, et que, d'un seul tenant avec cette collerette d'appui 14, elle comporte, d'une part, à sa périphérie interne, une douille 15, qui se raccorde à ladite collerette d'appui 14 par un coude de pliage largement arrondi, et qui, s'étendant globalement axialement, traverse axialement ledit dispositif débrayeur 11, à la faveur de l'ouverture centrale 12 de celui-ci, et, d'autre part, à sa périphérie externe, de place en place le long de celle-ci, des pattes 16, qui traversent également axialement le dispositif débrayeur 11, chacune entre deux doigts radiaux adjacents de celui-ci, et qui, chacune respectivement, portent, circonférentiellement, en porte-à-faux, à leur extrémité, au droit de la collerette d'appui 14, et globalement parallèlement à celle-ci, des doigts de retenue 17 propres à assurer, en coopération avec cette collerette d'appui 14, le maintien axial de l'ensemble sur le dispositif débrayeur 11.

Tel que décrit dans la FR-A 2 544 036 mentionnée ci-dessus, la mise en place d'une telle pièce d'accostage 13 sur le dispositif débrayeur 11 se fait suivant un montage du type à baïonnette : après un rapprochement relatif suffisant de la pièce d'accostage 13 et du dispositif débrayeur 11, on assure, axialement, une flexion relative, vis-à-vis des autres, de l'extrémité de chacun des doigts radiaux du dispositif débrayeur 11 sur lequel doit circonférentiellement s'engager le doigt de retenue 17 des pattes 16 de la pièce d'accostage 13, puis on assure, circonférentiellement, une rotation relative, autour de l'axe de l'ensemble, de ladite pièce d'accostage 13 vis-à-vis dudit dispositif débrayeur 11, pour qu'un tel engagement ait effectivement lieu, et on libère ensuite les doigts radiaux précédemment fléchis du dispositif débrayeur 11.

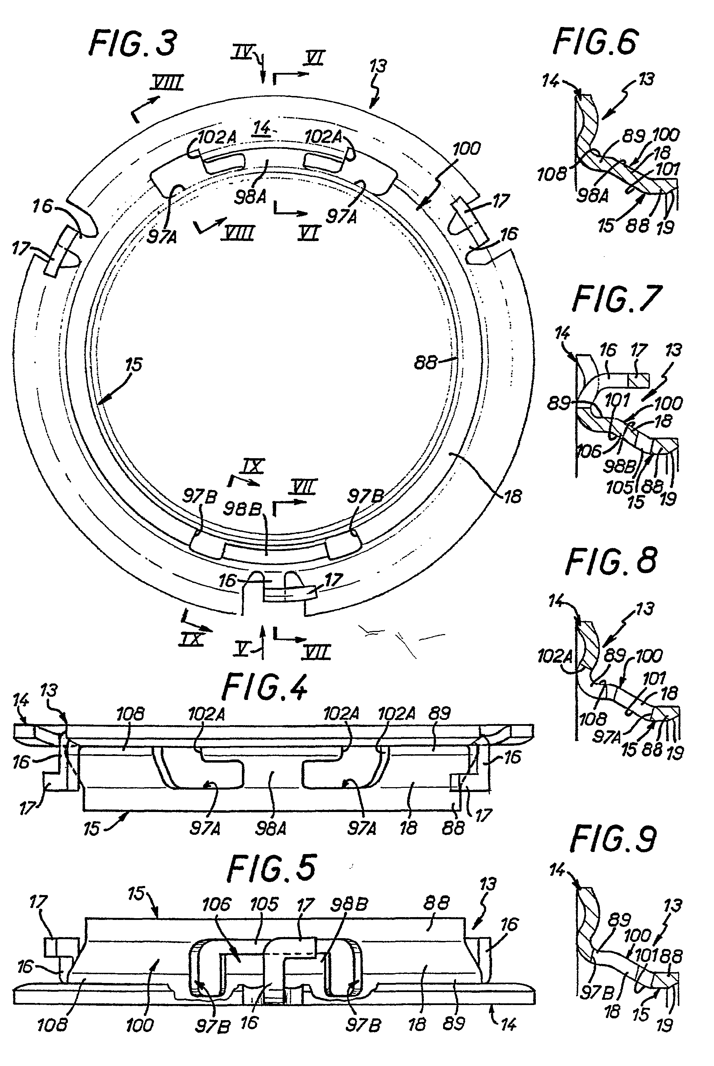

Dans la forme de réalisation plus particulièrement représentée sur les figures 1 à 5, et pour des raisons qui apparaîtront ci-après, la douille axiale 15 de la pièce d'accostage 13, que est en pratique en tôle convenablement conformée, par exemple en tôle emboutie, présente, dans sa zone médiane, entre deux tronçons globalement cylindriques 88, 89, un tronçon globalement tronconique 18, celui de ses tronçons cylindriques qui est axialement le plus éloigné de sa collerette d'appui 14, à savoir le tronçon 88, ayant globalement un diamètre moindre que celui de l'autre, le tronçon 89.

A son extrémité libre, c'est-à-dire à l'extrémité libre de son tronçon cylindrique 88 de moindre diamètre, elle est, à sa périphérie interne, chanfreinée, et elle forme ainsi, pour des raisons qui apparaîtront également ci-après, une portée tronconique d'engagement 19.

La butée de débrayage 10 ne fait pas non plus, en soi, partie de la présente invention.

De manière connue en soi, elle comporte, globalement, un élément d'attaque 20, par lequel elle est adaptée à agir sur le dispositif débrayeur 11, par l'intermédiaire de la pièce d'accostage 13, tel que détaillé ci-après, un élément de manoeuvre 22, par lequel elle est destinée, dans les formes de réalisation représentées, à être montée coulissante axialement sur un quelconque organe de guidage, non représenté, constitué par exemple par la "trompette" usuellement prévue en saillie sur le carter de la boîte de vitesses associée, et des moyens d'attelage qui assujettissent axialement ledit élément d'attaque 20 audit élément de manoeuvre 22, et par lesquels, dans ces formes de réalisation, et tel que schématisé en traits interrompus sur la figure 1, elle est par ailleurs adaptée à être actionnée par un organe de commande 24, constitué par exemple, par une fourchette de débrayage à doigts ou bras 21.

Dans les formes de réalisation représentées, l'élément d'attaque 20 est constitué par un roulement à billes.

Pour coopération avec la pièce d'accostage 13, celui-ci comporte une pièce 25, dite ici par commodité pièce d'attaque.

Dans les formes de réalisation représentées, cette pièce d'attaque 25 est constituée par la bague interne de ce roulement à billes, celle-ci étant suffisamment prolongée axialement à cet effet en direction du dispositif débrayeur 11.

En pratique, il s'agit ici d'une pièce massive convenablement usinée.

Conjointement, dans les formes de réalisation représentées, l'élément de manoeuvre 22 comporte, axialement, un manchon 26, par lequel il est adapté à être engagé à coulissement sur l'organe de guidage associé, et, transversalement, à l'extrémité dudit manchon 26 opposée à l'élément d'attaque 20, pour coopération avec celui-ci, un flasque annulaire 27.

A sa périphérie externe, ce flasque annulaire 27 porte lui-même, en saillie, une couronne 28 qui, coaxialement par rapport au manchon 26 et dans le même sens que celui-ci, s'étend globalement axialement, autour de la bague externe 29 du roulement à billes constituant l'élément d'attaque 20.

S'agissant, en pratique, das les formes de réalisation représentées, d'une butée de débrayage autocentreuse à autocentrage maintenu, un jeu est laissé annulairement libre entre cette couronne 28 et le roulement à billes constituant l'élément d'attaque 20.

Les moyens d'attelage assujettissant axialement cet élément d'attaque 20 à l'élément de manoeuvre 22 sont constitués, dans les formes de réalisation représentées, par un capot 30, qui, par une jupe 31, est engagé sans jeu sur la couronne 28 de l'élément de manoeuvre 22.

A l'extrémité axiale de cette jupe 31 disposée du côté du dispositif débrayeur 11, le capot 30 présente, radialement, en direction de l'axe de l'ensemble, un bord tombé 33, contre lequel porte, par sa tranche correspondante, la bague externe 29 du roulement à billes constituant l'élément d'attaque 20.

A l'autre extrémité axiale de sa jupe 31, le capot 30, forme, pour l'action des doigts ou bras 21 de l'organe de commande 24, deux bras 34, qui, en positions diamétralement opposées l'un par rapport à l'autre, s'étendent radialement en saillie en direction opposée à l'axe de l'ensemble, ou, autrement dit, vers l'extérieur.

Bien entendu, il est prévu, entre le capot 30 ainsi constitué et l'élément de manoeuvre 22, des moyens propres à assujettir axialement ce capot 30 à cet élément de manoeuvre 22.

Il peut s'agir, par exemple, de moyens d'encliquetage, des pattes élastiquement déformables étant prévues à cet effet dans la couronne 28 de l'élément de manoeuvre 22 pour coopération avec des ouvertures également prévues à cet effet dans la jupe 31 du capot 30.

Ces dispositions sont bien connues par elles-mêmes, notamment par la demande de brevet français qui, déposée le 18 juin 1981 sous le No 81 12001, a été publiée sous le No 2.508.125, et ne faisant pas en soi partie de la présente invention, elles ne seront pas décrites plus en détail ici.

De même, s'agissant, en pratique, comme déjà indiqué ci-dessus, d'une butée de débrayage autocentreuse à autocentrage maintenu, il est prévu, entre l'élément d'attaque 20 et l'élément de manoeuvre 22, des moyens élastiques à action axiale, constitués, par exemple, tel que représenté, par une rondelle ondulée 37 du type de celle vendue sous la dénomination commerciale "ONDUFLEX".

Dans les formes de réalisation représentées, cette rondelle ondulée 37 prend appui sur le flasque annulaire 27 de l'élément de manoeuvre 22, et elle porte sur la tranche correspondante de la bague externe 29 du roulement à billes constituant l'élément d'attaque 20, pour sollicitation de cette bague externe contre le bord tombé 33 du capot 30.

De manière connue en soi, entre la pièce d'attaque 25 de la butée de débrayage 10 ainsi constituée, d'une part, et la pièce d'accostage 13 portée par le dispositif débrayeur 11, d'autre part, sont établis des moyens de solidarisation en traction propres à assurer une liaison axiale entre lesdites pièces dans le sens axial qui, tel que schématisé par la flèche F1 sur la figure 1, va du dispositif débrayeur 11 à la butée de débrayage 10.

La pièce d'accostage 13 comportant axialement une douille 15, et celle-ci étant coaxiale de la pièce d'attaque 25, c'est entre cette douille 15 et cette pièce d'attaque 25 que sont établis lesdits moyens de solidarisation en traction.

Plus précisément, dans les formes de réalisation représentées, la pièce d'attaque 25 est engagée intérieurement dans la douille 15 de la pièce d'accostage 13, en sorte que les moyens de solidarisation en traction en question interviennent entre la périphérie externe de cette pièce d'attaque 25 et la périphérie interne de cette douille 15.

D'une manière générale ils comportent, figures 1 et 2, d'une part, un organe annulaire de couplage 42, qui est porté par l'une quelconque des pièces 13, 25 à solidariser en traction, et qui est élastiquement déformable radialement, et, d'autre part, une portée d'entraînement 44, qui est ménagée globalement transversalement sur l'autre desdites pièces, et avec laquelle ledit organe annulaire de couplage 42 est apte à coopérer axialement en appui dans le sens axial considéré, celui repéré par la flèche F1 sur la figure 1.

Dans les formes de réalisation représentées, l'organe annulaire de couplage 42 est porté par la pièce d'accostage 13, suivant des dispositions qui seront décrites plus en détail ultérieurement, et la portée d'entraînement 44 correspondante est donc ménagée sur la pièce d'attaque 25.

En pratique, cette portée d'entraînement 44 appartient à l'un des flancs d'une gorge 47 ménagée à la périphérie externe de la pièce d'attaque 25.

Dans les formes de réalisation représentées, ce flanc, qui est droit, perpendiculairement à l'axe de l'ensemble, et qui est tourné du côté de l'organe de commande 24, et donc du côté du flasque annulaire 27 de l'élément de manoeuvre 22, s'étend au voisinage de l'extrémité de la pièce d'attaque 25, et il présente, à sa racine, un dégagement 76.

A son extrémité, la pièce d'attaque 25 comporte, à sa périphérie externe, une portée cylindrique 77, qui limite radialement la portée d'entraînement 44, et, en liaison avec cette portée cylindrique 77, qui s'étend axialement, une portée tronconique d'engagement 78.

Soit D4 le diamètre de cette portée cylindrique 77.

Il est légèrement inférieur, pour le montage, au diamètre D2 de la périphérie interne du tronçon globalement cylindrique de moindre diamètre 88 de la douille 15 de la pièce d'accostage 13.

Dans les formes de réalisation représentées, l'organe annulaire de couplage 42 est en fil rond convenablement roulé et conformé.

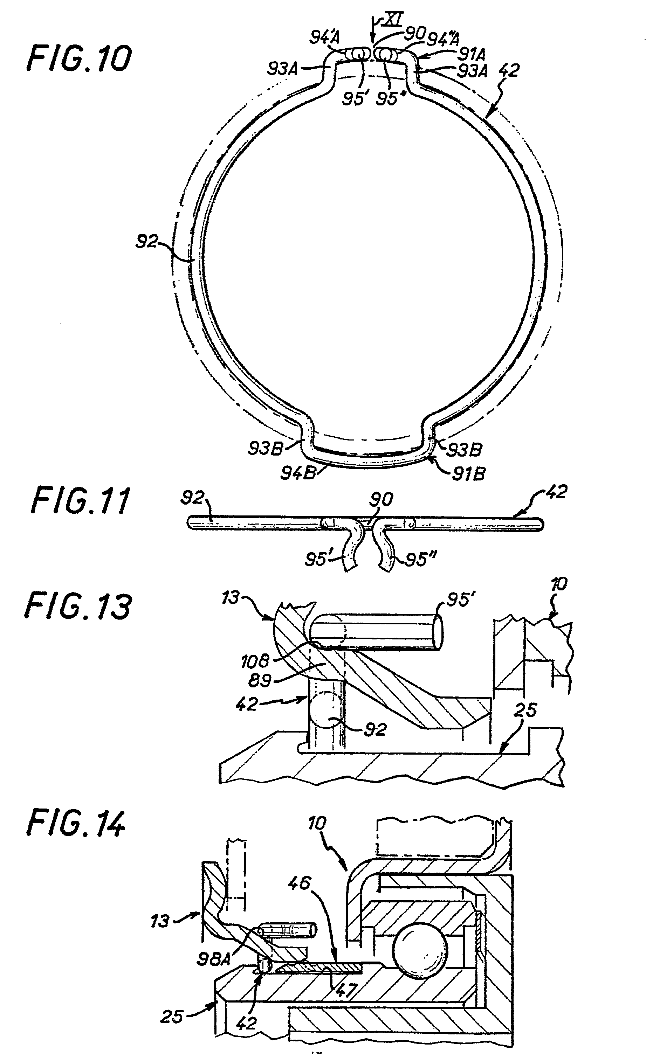

Pour son élasticité, il est, localement, ouvert par une fente 90, qui l'affecte globalement radialement, figures 10 et 11.

Localement, il comporte au moins deux pattes 91, qui s'étendent chacune globalement radialement.

Dans les formes de réalisation représentées, seules deux pattes 91A, 91B sont ainsi prévues, en positions diamétralement opposées l'une par rapport à l'autre, et elles s'étendent l'une et l'autre en direction opposée à l'axe de l'ensemble, ou, autrement dit, vers l'extérieur.

Ces pattes 91A, 91B sont chacune formées par une déformation locale en arceau de l'organe annulaire de couplage 42 et elles s'étendent chacune dans le plan de la partie courante, annulaire, 92, de celui-ci.

En pratique, chacune des pattes 91A, 91B comporte une portion médiane 94A, 94B, qui, concentrique de la partie courante 92, en étant décalée radialement par rapport à celle-ci, s'étend sensiblement circulairement, et, disposées chacune respectivement aux extrémités circonférentielles de cette portion médianne 94A, 94B, pour en assurer la liaison à ladite partie courante 92, deux portions d'extrémité sensiblement rectilignes 93A, 93B, qui, sensiblement parallèles l'une à l'autre, s'étendent sensiblement parallèlement au plan diamétral de l'ensemble passant par la zone médiane desdites portions médianes 94A, 94B.

En pratique, également, dans les formes de réalisation représentées, la fente 90 affecte la portion médiane 94 de l'arceau que constitue l'une des pattes 91, en l'espèce la patte 91A, et ladite portion médiane 94A de celle-ci est ainsi fractionnée en deux tronçons 94'A, 94"A qui s'étendent chacun en porte-à-faux à compter de la portion d'extrémité 93A correspondante.

En outre, dans ces formes de réalisation, chacun de ces tronçons 94'A, 94"A de la portion médiane 94A de la patte 91A ainsi ouverte par la fente 90 se prolonge, à son extrémité libre, c'est-à-dire à son extrémité opposée à la portion d'extrémité 93A correspondante, par un retour 95', 95" propre à faciliter, conjointement avec l'autre, l'application d'un effort d'écartement à l'organe annulaire de couplage 42.

Les retours 95', 95" que présente ainsi l'organe annulaire de couplage 42 s'étendent, en pratique, sensiblement parallèlement à son axe, globalement perpendiculairement au plan de sa partie courante 92, et, dans les formes de réalisation représentées, ils sont chacun en forme de demi-onde, avec leurs concavités tournées l'une vers l'autre.

Par sa partie courante 92 l'organe annulaire de couplage 42 est disposé à l'intérieur de la douille 15 de la pièce d'accostage 13.

Suivant l'invention, ses pattes 91A, 91B, qui, s'étendant globalement radialement, traversent chacune la douille 15 de la pièce d'accostage 13 à la faveur d'évidements 97A, 97B ménagés à cet effet dans celle-ci, sont chacune aptes à coopérer en appui, par l'une au moins de leurs portions, avec une portée de guidage 98A, 98B appartenant à une surface de guidage 100 coaxiale de ladite douille 15.

Dans les formes de réalisation représentées, cette surface de guidage 100 est tronconique et elle appartient à la surface de la douille 15 de la pièce d'accostage 13 opposée à celle le long de laquelle s'étend circulairement la partie courante 92 de l'organe annulaire de couplage 42.

Autrement dit, elle appartient à la surface extérieure de la douille 15 dans les formes de réalisation représentées, et, en pratique, elle est formée par la surface externe du tronçon globalement tronconique 18 de celle-ci.

La pièce d'accostage 13 étant d'épaisseur sensiblement constante dans les formes de réalisation représentées, la conicité de la surface de guidage 100 suivant l'invention est égale à celle de la surface interne 101 correspondante du tronçon globalement tronconique 18 de la douille 15 de la pièce d'accostage 13, qui est la surface de celle-ci avec laquelle est destinée à coopérer la partie courante 92 de l'organe annulaire de couplage 42.

C'est, bien entendu, par leur portion médiane 94A, 94B que les pattes 91A, 91B de l'organe annulaire de couplage 42 coopèrent avec cette surface de guidage 100, et, plus précisément, avec les portées de guidage 98A, 98B correspondantes de celle-ci.

Pour chacune de ces pattes 91A, 91B de l'organe annulaire de couplage 42, la douille 15 de la pièce d'accostage 13 comporte, en pratique, disposés chacun respectivement de part et d'autre de la portée de guidage 98A, 98B correspondante, et allongés axialement parallèlement à celle-ci, deux évidements 97A, 97B, un pour chacune des portions d'extrémité 93A, 93B d'une telle patte 91A, 91B.

Ces évidements 97A, 97B affectent pour l'essentiel le tronçon globalement tronconique 18 de cette douille 15.

Pour la patte 91A, c'est-à-dire pour celle qui est ouverte par la fente 90, les deux évidements 97A sont distincts, et ils sont allongés non seulement axialement, mais encore circonférentiellement.

En outre, à leur extrémité circonférentielle opposée à la portée de guidage 98A qu'ils flanquent, ces évidements 97A se prolongent chacun par un tronçon axial 102A, qui, non seulement, s'étend sur le tronçon globalement cylindrique de plus grand diamètre 89 de la douille 15, mais encore mord sur la collerette d'appui 14 en continuité avec laquelle se trouve celle-ci.

Pour la patte 91B de l'organe annulaire de couplage 42, c'est-à-dire pour celle des pattes de celui-ci dont la portion médiane 94B est continue, les deux évidements 97B de la douille 15 de la pièce d'accostage 13 se rejoignent au contraire l'un l'autre en U, à l'extrémité de la portée de guidage 98B qu'ils flanquent, par une portion médiane, circonférentielle, 105, qui leur est commune.

Ils se prolongent aussi sensiblement sur le tronçon globalement cylindrique de plus grand diamètre 89 de la douille 15 de la pièce d'accostage 13, en s'étendant axialement jusqu'au voisinage de la collerette d'appui 14 de celle-ci, mais sans mordre sur cette dernière.

La portée de guidage 98B avec laquelle coopère la portion médiane 94B de la patte 91B de l'organe annulaire de couplage 42 se trouve donc en pratique appartenir à une languette 106 qui, découpée dans la douille 15 de la pièce d'accostage 13, s'étend en porte-à-faux à compter de la collerette d'appui 14 de celle-ci.

Dans les formes de réalisation représentées, la surface de guidage 100 suivant l'invention se prolonge par une surface de repos cylindrique 108 propre, ainsi qu'il apparaîtra ci-après, à un maintien en configuration de découplage de l'organe annulaire de couplage 42.

Il s'agit, en pratique, de la surface extérieure du tronçon globalement cylindrique de plus grand diamètre 89 de la douille 15 de la pièce d'accostage 13.

Soit D5 son diamètre, figure 2.

Ainsi qu'il est aisé de le comprendre l'extension axiale de cette surface de repos cylindrique 108, liée à celle du tronçon globalement cylindrique de plus grand diamètre 89 de la douille 15, est, pour une large part, due au coude de pliage largement arrondi par lequel celle-ci se raccorde à la collerette d'appui 14.

L'organe annulaire de couplage 42 équipe par avance la pièce d'accostage 13, qui est elle-même destinée à équiper par avance le dispositif débrayeur 11 de l'embrayage à commander.

Pour sa mise en place sur cette pièce d'accostage 13, l'organe annulaire de couplage 42, présenté en biais, du côté de la collerette d'appui 14, est d'abord engagé, par sa patte 91B, dans la portion médiane circonférentielle de raccordement 105 des évidements 97B de la douille 15, avec crochetage de cette patte 91B sur la languette 106 correspondante de celle-ci.

Il est ensuite redressé, et les retours 95', 95" de sa patte 91A sont alors l'un après l'autre engagés dans les évidements 97A correspondants de cette douille 15.

L'organe annulaire de couplage 42 porte dès lors, par la portion médiane 94A, 94B de ses pattes 91A, 91B, sur les portées de guidage 98A, 98B de la pièce d'accostage 13.

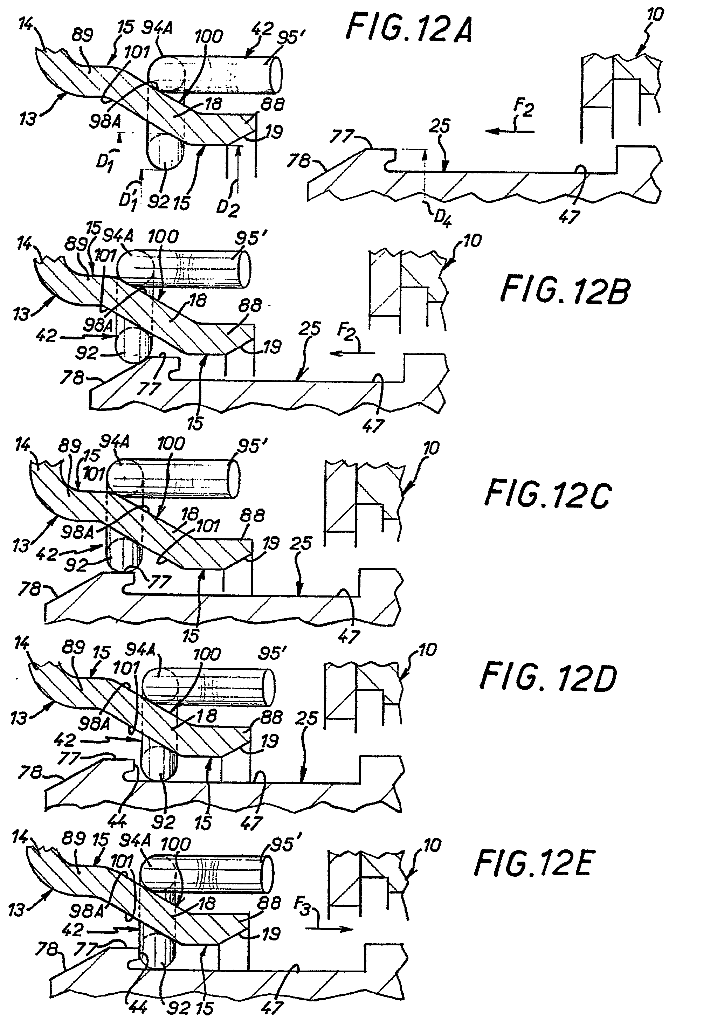

Compte tenu, d'une part, de la conicité de la surface de guidage 100 à laquelle appartiennent ces portées de guidage 98A, 98B, et, d'autre part, de sa propre élasticité, il se déplace de lui-même, lorsqu'il est relâché, le long du tronçon globalement tronconique 18 correspondant de la douille 15 de la pièce d'accostage 13, jusqu'à venir, au repos, figure 12A, à proximité de l'extrémité de ce tronçon globalement tronconique 18 proche du tronçon globalement cylindrique de moindre diamètre 88 de ladite douille 15.

Pour la configuration de repos correspondante, l'organe annulaire de couplage 42 porte encore, élastiquement, par la portion médiane 94A, 94B de ses pattes 91A, 91B, contre les portées de guidage 98A, 98B correspondantes de la pièce d'accostage 13, et, plus précisément, de sa douille 15.

Les dispositions sont telles que, conjointement, par sa partie courante 92, il est au contact de la surface interne 101 du tronçon globalement tronconique 18 correspondant de cette douille 15, ou, au moins, est proche de celle-ci, la longueur des portions d'extrémité 93A, 93B de ses pattes 91A, 91B ayant été établie en consequence.

Quoi qu'il en soit, grâce à la disposition suivant l'invention, c'est-à-dire grâce à l'appui de la portion médiane 94A, 94B des pattes 91A, 91B de l'organe annulaire de couplage 42 sur des portées de guidage 98A, 98B coaxiales de la douille 15 de la pièce d'accostage 13, l'organe annulaire de couplage 42, et, plus précisément, sa partie courante 92, se trouve au moins sensiblement correctement centrée par rapport à cette douille 15 compte tenu du jeu nécessaire à son montage.

La partie courante 92 de l'organe annulaire de couplage 42 se trouve donc convenablement centrée par rapport à l'axe de l'ensemble, et, notamment, par rapport à la pièce d'attaque 25 de la butée de débrayage 10.

Par ailleurs, et ainsi qu'on le notera, par ses pattes 91A, 91B, l'organe annulaire de couplage 42 se trouve correctement retenu axialement, dans les limites d'un débattement axial explicité ci-après, sur la pièce d'accostage 13, sans qu'il soit nécessaire de prévoir une quelconque autre disposition pour en limiter le débattement axial sur celle-ci.

Soit D1 et D'1, respectivement, le diamètre externe et le diamètre interne de la partie courante 92 de l'organe annulaire de couplage 42 dans sa configuration de repos, figure 12A.

Le diamètre D1 est supérieur à celui D2 de la périphérie interne du tronçon globalement cylindrique de moindre diamètre 88 de la douille 15 de la pièce d'accostage 13, et le diamètre D'1 est inférieur à celui D4 de la portée cylindrique 77 de la pièce d'attaque 25 de la butée de débrayage 10.

Si donc, suivant la flèche F2 des figures 12A, 12B, la butée de débrayage 10, sous la sollicitation par exemple de l'organe de commande 24, est engagée, par sa pièce d'attaque 25, dans la douille 15 de la pièce d'accostage 13, c'est par la portée tronconique d'engagement 78 de sa pièce d'attaque 25 qu'elle accoste, figure 12B, l'organe annulaire de couplage 42, et, plus précisément, la partie courante 92 de celui-ci.

Mais, pour les raisons exposées ci-dessus, lors de cet accostage, l'organe annulaire de couplage 42 se trouve convenablement centré par rapport à la pièce d'attaque 25, et son accostage se fait donc suivant une circonférence, sans risque de mise en biais.

Le mouvement d'engagement de la butée de débrayage 10 étant poursuivi, figure 12C, l'organe annulaire de couplage 42 se trouve à la fois entraîné axialement par la pièce d'attaque 25, et déformé radialement par celle-ci, sous la sollicitation de sa portée d'engagement 78 faite tronconique à cet effet.

Refoulée radialement, la partie courante 92 de cet organe annulaire de couplage 42 se plaque contre la surface interne 101 du tronçon globalement tronconique 18 de la douille 15 de la pièce d'accostage 13, en suivant cette surface en direction de la collerette d'appui 14 de celle-ci.

Conjointement, par leur portion médiane 94A, 94B, les pattes 91A, 91B de l'organe annulaire de couplage 42 restent sensiblement au contact des portées de guidage 98A, 98B correspondantes de la pièce d'accostage 13.

Lorsque, figure 12D, l'engagement de la butée de débrayage 10 est suffisant pour que la portée d'entraînement 44 que présente sa pièce d'attaque 25 ait franchi la partie courante 92 de l'organe annulaire de couplage 42, celui-ci, pour les raisons exposées ci-dessus, tend à revenir de lui-même à sa configuration initiale de repos.

Il s'engage alors, radialement, par sa partie courante 92, dans la gorge 47 de la pièce d'attaque 25 de la butée de débrayage 10.

Si donc, suivant la flèche F3 de la figure 12E, un mouvement axial inverse du précédent est appliqué à celle-ci, par exemple à l'aide, comme précédemment, de l'organe de manoeuvre 24, l'organe annulaire de couplage 42, et, plus précisément, sa partie courante annulaire 92, se trouvent pris entre, d'une part, la portée d'entraînement 44 de la pièce d'attaque 25 de cette butée de débrayage 10, et, d'autre part, la surface tronconique interne 101 de la douille 15 de la pièce d'accostage 13.

L'attelage, ou couplage recherché, est alors assuré : si, suivant la flèche F1 de la figure 1, qui correspond à la flèche F3 de la figure 12E, une action de traction est exercée sur la butée de débrayage 10 par l'organe de commande 24, cette action de traction est transmise au dispositif débrayeur 11 à travers successivement l'organe annulaire de couplage 42, par la portée d'entraînement 44, et la pièce d'accostage 13, par la surface interne tronconique 101 de la douille 15 de celle-ci.

Bien entendu, un jeu de montage suffisant, non représenté sur les figures, est prévu entre l'organe annulaire de couplage 42 et la pièce d'accostage 13, pour que, en service, celle-ci puisse effectivement suivre le dispositif débrayeur 11 dans ses éventuelles déformations.

Pour le découplage, il peut être procédé manuellement, à l'aide par exemple d'un outil propre à agir en écartement sur les retours 95E, 95F de l'organe annulaire de couplage 42.

Tel qu'illustré à la figure 13, l'organe annulaire de couplage 42 est alors disposé sur la surface de repos cylindrique 108 prévue à cet effet sur la pièce d'accostage 13, et, pour la configuration déployée qui est alors la sienne, et qui forme pour lui une configuration de découplage, la pièce d'attaque 25 de la butée de débrayage 10 peut échapper à sa partie courante 92.

En variante, pour le découplage, il peut être mis en oeuvre un organe annulaire de découplage 46 propre à contraindre l'organe annulaire de couplage 42 à passer de sa configuration de couplage, ou configuration de repos, à une configuration de découplage propre à lui permettre de libérer, pour cette dernière, la pièce d'attaque 25 de la butée de débrayage 10.

Tel qu'illustré à la figure 14, un tel organe annulaire de découplage 46 est monté mobile axialement dans la gorge 47 de cette pièce d'attaque 25.

Les dispositions correspondantes ne relevant pas par elles-mêmes de la présente invention, et faisant au contraire l'objet de la FR-A 2 588 338 mentionnée ci-dessus, elles ne seront pas décrites ici.

Bien entendu, la présente invention ne se limite pas aux formes de réalisation décrites et représentées, mais englobe toute variante d'exécution.

En particulier, si, dans ce qui précède, la pièce d'attaque de la butée de débrayage est constituée par la bague interne du roulement à billes que comporte cette butée de débrayage, elle pourrait aussi bien être constituée par la bague externe de ce roulement.

De plus, cette pièce d'attaque, au lieu d'être d'un seul tenant avec une telle bague, pourrait être aussi si bien simplement liée axialement à celle-ci.

Par ailleurs, bien que pour des raisons de simplicité de fabrication, notamment, l'organe annulaire de couplage suivant l'invention ne comporte préférentiellement que deux pattes, on ne sortirait pas du cadre de l'invention en le dotant d'un nombre supérieur de telles pattes.

En outre, les pattes que comporte ainsi cet organe annulaire de couplage ne résultent pas nécessairement d'une simple déformation locale en arceau de celui-ci, mais pourraient par exemple aussi bien être rapportées sur sa partie courante et/ou avoir une quelconque autre configuration ou constitution.

De plus, ces pattes pourraient également coopérer avec une surface de guidage coaxiale de la douille de la pièce d'accostage par une autre portion que leur portion médiane, conjointement, ou non, avec celle-ci.

Enfin, au lieu d'être tronconique, cette surface de guidage pourrait, en variante, être par exemple cylindrique, avec, de préférence, dans ce cas, un épaulement du côté de la collerette d'appui, pour limiter dans ce sens la capacité de déplacement axial de l'organe annulaire de couplage.

## Revendications

1. Montage de butée de débrayage, du genre mettant en oeuvre, pour l'attelage d'une butée de débrayage (10) au dispositif débrayeur (11) d'un embrayage, d'une part, une pièce (13), dite ici par commodité pièce d'accostage, qui est convenablement rapportée sur ledit dispositif débrayeur (11), et qui comporte elle-même, globalement radialement, une collerette d'appui (14), par laquelle elle est apte à porter axialement sur ledit dispositif débrayeur (11), et, globalement axialement, une douille (15), par laquelle elle traverse axialement ce dernier, et, d'autre part, des moyens de solidarisation en traction, qui, établis entre la pièce d'accostage (13) et une pièce (25), dite ici par commodité pièce d'attaque, appartenant à la butée de débrayage (10), sont propres à assurer une liaison axiale entre lesdites pièces (13, 25) dans le sens axial allant du dispositif débrayeur (11) à la butée de débrayage (10), et qui comportent eux-mêmes un organe annulaire de couplage (42), qui est porté par l'une quelconque desdites pièces (13, 25), et qui est élastiquement déformable radialement, et une portée d'entraînement (44), qui est ménagée globalement transversalement sur l'autre desdites pièces (13, 25), et avec laquelle ledit organe annulaire de couplage (42) est apte à coopérer axialement en appui, caractérisé en ce que, l'organe annulaire de couplage (42) comportant au moins deux pattes (91), qui, s'étendant globalement radialement, traversent chacune la douille (15) de la pièce d'accostage (13) à la faveur d'évidements (97) ménagés à cet effet dans celle-ci, lesdites pattes sont chacune aptes à coopérer en appui, par une de leurs portions au moins, avec une portée de guidage (98) appartenant à une surface de guidage (100) coaxiale de ladite douille (15).

2. Montage de butée de débrayage suivant la revendication 1, caractérisé en ce que la surface de guidage (100) est tronconique.

3. Montage de butée de débrayage suivant l'une quelconque des revendications 1, 2, caractérisé en ce que la surface de guidage (100) appartient à la surface de la douille (15) de la pièce d'accostage (13) opposée à celle le long de laquelle s'étend circulairement la partie courante (92) de l'organe annulaire de couplage (42).

4. Montage de butée de débrayage suivant la revendication 3, caractérisé en ce que, la partie courante (92) de l'organe annulaire de couplage coopérant avec une surface (101) de la douille (15) de la pièce d'accostage (13) qui est également tronconique, la conicité de la surface de guidage (100) est égale à celle de cette dernière.

5. Montage de butée de débrayage suivant l'une quelconque des revendications 1 à 4, caractérisé en ce que la surface de guidage (100) se prolonge par une surface de repos cylindrique (108) propre à un maintien en configuration de découplage de l'organe annulaire de couplage (42).

6. Montage de butée de débrayage suivant l'une quelconque des revendications 1 à 5, caractérisé en ce que chacune des pattes (91) de l'organe annulaire de couplage (42) est formée par une déformation locale en arceau de celui-ci, et s'étend dans le plan de sa partie courante (92).

7. Montage de butée de débrayage suivant la revendication 6, caractérisé en ce que, l'organe annulaire de couplage (42) étant ouvert par une fente (90), ladite fente affecte la portion médiane (94A) de l'arceau que constitue l'une (91A) de ses pattes (91), ladite portion médiane (94A) étant ainsi fractionnée en deux tronçons (94'A, 94"A).

8. Montage de butée de débrayage suivant la revendication 7, caractérisé en ce que, chacun desdits tronçons (94'A, 94"A) de la portion médiane (94A) de la patte (91A) de l'organe annulaire de couplage (42) ouverte par une fente (90) se prolonge par un retour (95', 95") propre à faciliter, conjointement avec l'autre, l'application d'un effort d'écartement audit organe annulaire de couplage (42).

9. Montage de butée de débrayage suivant l'une quelconque des revendications 6 à 8, caractérisé en ce que, pour chacune des pattes (91) de l'organe annulaire de couplage, la douille (15) de la pièce d'accostage (13) comporte, disposés chacun respectivement de part et d'autre de la portée de guidage (98) correspondante, et allongés axialement parallèlement à celle-ci, deux évidements (97), un pour chacune des portions d'extrémité (93) d'une telle patte (91).

10. Montage de butée de débrayage suivant les revendications 7 et 9, prises conjointement, caractérisé en ce que, pour celle (91A) des pattes (91) de l'organe annulaire de couplage (42) qui est ouverte par une fente (90), les deux évidements (97A) de la douille (15) de la pièce d'accostage (13) sont distincts, et ils sont allongés non seulement axialement, mais encore circonférentiellement.

11. Montage de butée de débrayage suivant la revendication 10, caractérisé en ce que, à leur extrémité circonférentielle opposée à la portée de guidage qu'ils flanquent, lesdits évidements (97A) se prolongent chacun par un tronçon axial (102A).

12. Montage de butée de débrayage suivant l'une quelconque des revendications 9 à 11, caractérisé en ce que, pour une patte (91B) de l'organe annulaire de couplage (42) dont la portion médiane (94B) est continue, les deux évidements (97B) de la douille (15) de la pièce d'accostage (13) se rejoignent l'un l'autre en U à l'extrémité de la portée de guidage (98B) qu'ils flanquent.

13. Montage de butée de débrayage suivant l'une quelconque des revendications 1 à 12, caractérisé en ce que l'organe annulaire de couplage (42) est porté par la pièce d'accostage (13), sa partie courante (92) est disposée à l'intérieur de la douille (15) de celle-ci, ses pattes (91) s'étendent radialement en direction opposée à l'axe de l'ensemble, et la surface de guidage (100) appartient à la surface extérieure de ladite douille (15).

14. Montage de butée de débrayage suivant l'une quelconque des revendications 1 à 13, caractérisé en ce que la portée d'entraînement (44) appartient à l'un des flancs d'une gorge (47) dans laquelle est monté mobile axialement un organe annulaire de découplage (46) propre à contraindre l'organe annulaire de couplage (42) à passer de sa configuration de couplage à une configuration de découplage et, pour cette dernière, à libérer la pièce d'attaque (25).

15. Montage de butée de débrayage suivant l'une quelconque des revendications 1 à 14, caractérisé en ce que l'organe annulaire de couplage comporte deux pattes (91A, 91B) sensiblement disposées en positions diamétralement opposées l'une par rapport à l'autre.

**Patentansprüche**

1. Kupplungsausrücklageranordnung der Art, bei der zur Ankopplung eines Kupplungsausrücklagers (10) an die Ausrückvorrichtung (11) einer Kupplung einerseits ein Stück (13) zum Einsatz kommt, welches hier der Einfachheit halber als Kupplungsstück bezeichnet wird und auf zweckmäßige Weise an der genannten Ausrückvorrichtung (11) angebracht ist und welches selbst, im wesentlichen in radialer Richtung, einen Auflagekragen (14) besitzt, mit dem es axial auf der genannten Ausrückvorrichtung (11) aufliegen kann, und, im wesentlichen in axialer Richtung, eine Hülse (15), die es in axialer Richtung durchquert, und andererseits Zugverbindungselemente, die zwischen dem Kopplungsstück (13) und einem Stück (25), welches hier der Einfachheit halber als Treibelement bezeichnet wird und zum Kupplungsausrücklager (10) gehört, liegen und geeignet sind, eine axiale Verbindung zwischen den genannten Stücken (13, 25) in axialer Richtung von der Ausrückvorrichtung (11) zum Kupplungsausrücklager (19) herzustellen und die wiederum ein ringförmiges Verbindungsorgan (42) aufweisen, welches auf einem der genannten Stücke (13, 25) aufliegt und welches in radialer Richtung elastisch verformbar ist, sowie eine Antriebsfläche (44), die im wesentlichen quer auf dem anderen der genannten Stücke (13, 25) angebracht ist und mit der das genannte ringförmige Verbindungsorgan (42) axial aufliegend zusammenwirken kann, dadurch gekennzeichnet, daß das ringförmige Verbindungsorgan (42) wenigstens zwei Klammern (91) aufweist, die sich im wesentlichen in radialer Richtung erstrecken und jeweils durch die Hülse (15) des Kopplungsstücks (13) mittels Aussparungen (97) verlaufen, die zu diesem Zweck darin vorgesehen sind, während die genannten Klammern jeweils geeignet sind, mit wenigstens einem ihrer Teile durch Auflage mit einer Führungsfläche (98) zusammenzuwirken, die zu einer koaxialen Führungsoberfläche (100) der genannten Hülse (15) gehört.

2. Kupplungsausrücklageranordnung gemäß Anspruch 1, dadurch gekennzeichnet, daß die Führungsoberfläche (100) kegelstumpfartig ist.

3. Kupplungsausrücklageranordnung gemäß einem der Ansprüche 1, 2, dadurch gekennzeichnet, daß die Führungsoberfläche (100) zur Oberfläche der Hülse (15) des Kopplungsstücks (13) gehört, die derjenigen Oberfläche gegenüberliegt, entlang welcher sich rundherum der durchgehende Teil (92) des ringförmigen Verbindungsorgans (42) erstreckt.

4. Kupplungsausrücklageranordnung gemäß Anspruch 3, dadurch gekennzeichnet, daß der durchgehende Teil (92) des ringförmigen Verbindungsorgans mit einer Oberfläche (101) der Hülse (15) des Kopplungsstücks (13) zusammenwirkt, welche ebenfalls kegelstumpfartig ist, und die Konizität der Führungsoberfläche (100) gleich derjenigen des letztgenannten Stücks ist.

5. Kupplungsausrücklageranordnung gemäß einem der Ansprüche 1 bis 4, dadurch gekennzeichnet, daß die Führungsoberfläche (100) sich in einer zylindrischen Auflagefläche (108) fortsetzt, die geeignet ist, das ringförmige Verbindungsorgan (42) in entkoppelter Konfiguration festzuhalten.

6. Kupplungsausrücklageranordnung gemäß einem der Ansprüche 1 bis 5, dadurch gekennzeichnet, daß jede der Klammern (91) des ringförmigen Verbindungsorgans (42) aus einer lokalen bogenförmigen Verformung besteht und sich in die Ebene des durchgehenden Teils (92) erstreckt.

7. Kupplungsausrücklageranordnung gemäß Anspruch 6, dadurch gekennzeichnet, daß das ringförmige Verbindungsorgan (42) in Form eines Schlitzes (90) offen ist, der den mittleren Abschnitt (94A) des Bogens berührt, den die eine (91A) der Klammern (91) bildet, so daß der genannte mittlere Abschnitt (94A) in zwei Teilstücke (94'A, 94"A) zerfällt.

8. Kupplungsausrücklageranordnung gemäß Anspruch 7 dadurch gekennzeichnet, daß jedes der genannten Teilstücke (94'A, 94"A) des mittleren Abschnitts (94A) der Klammer (91A) des ringförmigen Verbindungsorgans (42), das in Form eines Schlitzes (90) offen ist, sich in Form eines Rücklaufs (95', 95") fortsetzt, der zusammen mit dem anderen die Ausübung einer Spreizkraft auf das genannte ringförmige Verbindungsorgan (42) gestattet.

9. Kupplungsausrücklageranordnung gemäß einem der Ansprüche 6 bis 8, dadurch gekennzeichnet, daß die Hülse (15) des Kopplungsstücks (13) für jede der Klammern (91) des ringförmigen Verbindungsorgans zwei Aussparungen (97) – jeweils eine pro Abschlußteil (93) einer solchen Klammer (91) – enthält, die jeweils beiderseits der entsprechenden Führungsfläche (98) angeordnet sind und sich in axialer Richtung parallel dazu verlängern.

10. Kupplungsausrücklageranordnung gemäß den Ansprüchen 7 und 9 zusammengenommen, dadurch gekennzeichnet, daß für diejenige (91A) der Klammern (91) des ringförmigen Verbindungsorgans (42), die in Form eines Schlitzes (90) offen ist, die beiden Aussparungen (97A) der Hülse (15) des Kopplungsstücks (13) unterschiedlich sind und nicht nur in axialer Richtung, sondern auch in Umfangsrichtung verlängert sind.

11. Kupplungsausrücklageranordnung gemäß Anspruch 10, dadurch gekennzeichnet, daß die genannten Aussparungen (97A) an ihrem Umfangsende, welches der davon flankierten Führungsfläche gegenüberliegt, jeweils durch ein axiales Teilstück (102A) fortgesetzt werden.

12. Kupplungsausrücklageranordnung gemäß einem der Ansprüche 9 bis 11, dadurch gekennzeichnet, daß für eine Klammer (91B) des ringförmigen Verbindungsorgans (42), dessen mittlerer Abschnitt (94B) durchgehend verläuft, die beiden Aussparungen (97B) der Hülse (15) des Kopplungsstücks (13) U-förmig am Ende der davon flankierten Führungsfläche (98B) zusammenkommen.

13. Kupplungsausrücklageranordnung gemäß einem der Ansprüche 1 bis 12, dadurch gekennzeichnet, daß das ringförmige Verbindungsorgan (42) auf dem Kopplungsstück (13) aufliegt und sein durchlaufener Teil (92) im Innern der Hülse (15) angeordnet ist, während sich die Klammern (91) radial in einer Richtung erstrecken, die der Richtung der Gesamtachse entgegengesetzt ist, und wobei die Führungsoberfläche (100) zur Außenfläche der genannten Hülse (15) gehört.

14. Kupplungsausrücklageranordnung gemäß einem der Ansprüche 1 bis 13, dadurch gekennzeichnet, daß die Antriebsfläche (44) zu einer der Flanken einer Rille (47) gehört, in der axial verschiebbar ein ringförmiges Verbindungsorgan (46) angebracht ist, wodurch das ringförmige Verbindungsorgan (42) gezwungen werden kann, aus der Kopplungskonfiguration in eine Entkopplungskonfiguration überzugehen und wodurch der Antriebsteil (25) für letztere Konfiguration freigegeben wird.

15. Kupplungsausrücklageranordnung gemäß einem der Ansprüche 1 bis 14, dadurch gekennzeichnet, daß das ringförmige Verbindungsorgan zwei Klammern (91A, 91B) aufweist, die im wesentlichen in Positionen angeordnet sind, die einander diametral gegenüberliegen.

## Claims

1. A clutch release bearing assembly of the kind employing for connecting a clutch release bearing (10) to the clutch release device (11) of a clutch, on the one hand, a part (13) called here for convenience a coupling part, which is suitably connected to the said clutch release device (11), and which itself comprises a generally radial circular bearing flange (14) by means of which it is adapted to bear axially on the said clutch release device (11), and a generally axial bush (15), by means of which it passes through the clutch release device (11) and, on the other hand, means for fastening in traction which, disposed between the coupling part (13) and a part (25) called here for convenience a driving part which forms part of the clutch release bearing (10, are adapted to provide an axial connection between the said parts (13, 25) in the axial direction going from the clutch release device (11) to the clutch release bearing (10), and which means themselves comprise an annular coupling element (42), which is carried by either one of the said parts (13, 25), and which is elastically deformable radially, and a circular entraining bearing surface (44), which is made generally transversely on the other of the said parts (13, 25), and with which the said annular coupling element (42) is adapted to cooperate in axial bearing, characterized in that the annular coupling element (42) comprises at least two lugs (91) extending generally radially, which each pass through the bush (15) of the coupling part (13) by means of openings (97) provided for this purpose in the latter, and the said lugs are each adapted to cooperate in bearing, by means of at least one of their portions, with a guiding bearing (98) forming part of a coaxial guiding surface (100) of the said bush (15).

2. A clutch release bearing assembly according to Claim 1, characterized in that the guiding surface (100) is frustoconical.

3. A clutch release bearing assembly according to any one of Claims 1 and 2, characterized in that the guiding surface (100) forms part of the surface of the bush (15) of the coupling part (13) opposite to that along which the main part (92) of the annular coupling element (42) extends circularly.

4. A clutch release bearing assembly according to Claim 3, characterized in that the main part (92) of the annular coupling element cooperates with a surface (101) of the bush (15) of the coupling part (13) which surface also is frustoconical and the conicity of the guiding surface (100) equals that of the latter.

5. A clutch release bearing assembly according to any one of Claims 1 to 4, characterized in that the guiding surface (100) is prolonged by a cylindrical resting surface (108) adapted to retain the annular coupling element (42) in the uncoupled configuration.

6. A clutch release bearing assembly according to any one of Claims 1 to 5, characterized in that each of the lugs (91) of the annular coupling element (42) is formed by a localized deformation of the latter into and arch extending in the plane of its main part (92).

7. A clutch release bearing assembly according to Claim 6, characterized in that the annular coupling element (42) is opened by a slit (90) in the middle portion (94A) of the arch which constitutes one (91A) of its lugs (91), the said middle portion (94A) thus being split into two sections (94'A, 94"A).

8. A clutch release bearing assembly according to Claim 7, characterized in that each of the said sections (94'A; 94"A) of the middle portion (94A) of the lug (91A) of the annular coupling element (42) opened by a slit (90) is prolonged by a return (95', 95") adapted to facilitate, conjointly with the other, the application of a separating force to the said annular coupling element (42).

9. A clutch release bearing assembly according to any one of Claims 6 to 8, characterized in that, for each of the lugs (91) of the annular coupling element (42), the bush (15) of the coupling part (13) comprises two openings (97), disposed respectively on either side of the corresponding guiding bearing (98) and elongated axially parallel to the latter, there being one opening (97) for each of the end portions (93) of the lug (91).

10. A clutch release bearing assembly according to Claims 7 and 9 taken together, characterized in that for that (91A) lug (91) of the annular coupling element (42) which is opened by a slit (90), the two openings (97A) in the bush (15) of the coupling part (13) are separated, and they are elongated not only axially but also circumferentially.

11. A clutch release bearing assembly according to Claim 10, characterized in that at their ends circumferentially away from the guiding bearing surface which they flank, the said openings (97A) are each prolonged by an axial section (102A).

12. A clutch release bearing assembly according to any one of Claims 9 to 11, characterized in that, for a lug (91B) of the annular coupling element (42) the middle portion (94B) of which is continuous, the two openings (97B) in the bush (15) of the coupling part (13) rejoin one another in a U-shape at the end of the guiding bearing surface (98B) which they flank.

13. A clutch release bearing assembly according to any one of Claims 1 to 12, characterized in that the annular coupling element (42) is carried by the coupling part (13), its main part (92) is disposed inside the bush (15) of the latter, its lugs (91) extend radially away from the axis of the assembly, and the guiding surface (100) forms part of the outer surface of the said bush (15).

14. A clutch release bearing assembly according to any one of Claims 1 to 13, characterized in that the entraining bearing surface (44) forms part of one of the flanks of a groove (47) in which an annular decoupling element (46) is mounted to be axially movable, which element is adapted to force the annular coupling element (42) to change from its coupling configuration to a decoupling configuration and, in the latter configuration to release the driving part (25).

15. A clutch release bearing assembly according to any one of Claims 1 to 14, characterized in that the annular coupling element comprises two lugs (91A, 91B) desposed in positions substantially diametrically opposite one another.

FIG.1

FIG.2

EP 0 243 229 B1

FIG.3

FIG.6

FIG.7

FIG.4

FIG.8

FIG.5

FIG.9

*FIG.10*

*FIG.11*

*FIG.13*

*FIG.14*

FIG.12A

FIG.12B

FIG.12C

FIG.12D

FIG.12E